**Europäisches Patentamt**

**European Patent Office**

**Office européen des brevets**

(11) Publication number: **0 163 208**
**B1**

# EUROPEAN PATENT SPECIFICATION

(45) Date of publication of patent specification: **08.08.90**

(21) Application number: **85106021.0**

(22) Date of filing: **15.05.85**

(51) Int. Cl.⁵: **B 60 J 1/17,** B 60 R 13/06

(54) Construction of door frame in motor vehicle.

(30) Priority: **30.05.84 JP 79615/84 u**

(43) Date of publication of application:
**04.12.85 Bulletin 85/49**

(45) Publication of the grant of the patent:
**08.08.90 Bulletin 90/32**

(84) Designated Contracting States:
**DE FR GB**

(56) References cited:
**EP-A-0 040 588**
**WO-A-86/02602**
**DE-A-3 340 476**
**FR-A-2 555 241**
**JP-U-8 781 680**

(73) Proprietor: **TOYOTA JIDOSHA KABUSHIKI KAISHA**
**1, Toyota-cho Toyota-shi**
**Aichi-ken 471 (JP)**

(72) Inventor: **Shiraishi, Daiichi**
**c/o TOYOTA JIDOSHI K.K. 1, Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

This invention relates to a construction of a door frame in a motor vehicle, wherein:

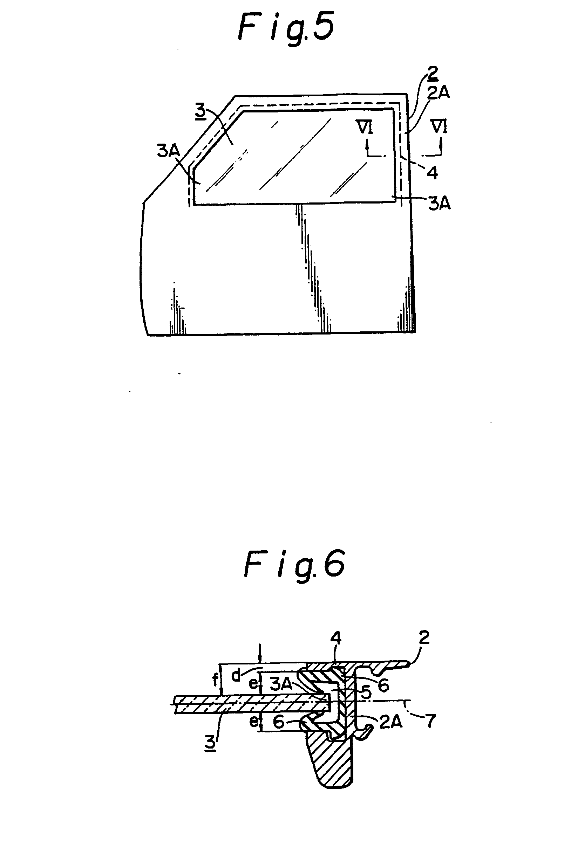

vertical side members of a door frame disposed along side end edges of a door glass are each formed with a guide portion being of a generally U-shape in crosssection and surrounding the side end edges; and

the side end edges of the door glass are slidably guided in a direction of opening or closing of the door glass by a glass run being of a generally U-shape in cross section and disposed in a guide groove inside the guide portion, the side end edges being restrained in the direction of the thickness of the door glass (See e.g. JP—U—87816/80 or a conventional construction as shown in figures 5 and 6 of the present application).

As a measure for reducing the air resistance and the wind whistle during running and for improving the aesthetic appearance of the motor vehicle, the outer surfaces of a vehicle body are made flush with one another.

As one of problems raise when the outer surfaces of the vehicle body is made flush with one another, there is a problem of a difference in stage between the door frame and the door glass.

Namely, the door glass is pushed outwardly due to the difference in pressure between the interior and the exterior of a compartment during running of the motor vehicle at high speed. To control this, it becomes necessary to provide a guide for holding the outer peripheral portion of the door glass from the outside, and consequently, a difference in stage should necessarily occur between the outer surfaces of the guide and the door glass.

Namely, as shown in Figs. 5 and 6, there has been proposed a construction of a door frame in a motor vehicle, wherein a forward or rear vertical side member 2A disposed along a forward or rear end edge 3A of a door glass 3 in a door frame 2 of a door 1 for the motor vehicle is formed with a guide portion 4 being of a generally U-shape in cross section and surrounding the forward or rear end edge 3A, the forward or rear end edge 3A of the door glass 3 is slidably guided by a glass run 6 being of a generally U-shape in cross section and disposed in a guide groove 5 inside this guide portion 4 in a direction of opening or closing of the door glass, and the end edge 3A is restrained in a direction of the thickness of the door glass.

As shown in the drawing, the shape of the glass run 6 in the direction of the thickness of the door glass 3 is such that the glass run 6 is formed into a symmetrical shape with a center line 7 of the thickness of the door glass being the axis of symmetry.

In consequence, the outer surface of the door glass 3 is disposed at the position having a difference in stage inwardly from the outer surface of the door frame 2 by a sum f obtained by adding a thickness d of an outer side portion of the door frame 2 to one-half of a dimension 2e obtained by subtracting a thickness of the door glass from at least a dimension of the glass run 6 in the direction of the thickness of the door glass 3.

To overcome the above-described problems, as described in U.S. Patent No. 2,024,773, the specification of Japanese Utility Model Laid-Open (Kokai) JP—U—158,321/1981, etc., for example, a guide shoe being of a generally crank-shape is coupled to an end edge of the door glass, and an end portion of this crank-shape guide shoe is guided in the vertical direction by a guide being of a U-shape in cross section, whereby the center of the guiding is shifted inwardly from the door glass into the vehicle body, so that the outer surfaces of the door frame and the door glass may be made flush with each other.

However, the above-described guide construction presents such disadvantages that the slidable resistance is increased when the door glass is vertically moved to open or close the same, the shape of window frame portion becomes complicated the number of parts, weight of the construction, and manufacturing cost increase, sealing failures occur and so forth.

In contrast thereto, as described in Japanese Utility Model JP—U—84 178/1984, published on June 7th, 1984, for example, there is proposed a construction of a glass run in a motor vehicle, comprising a glass run formed of a flexible member mounted to a groove portion inside a window frame of the motor vehicle, for directly guiding the end edge of a window glass and sealing the same, wherein the glass run is formed into an asymmetrical shape in the direction of the thickness of the window glass and the window glass run is guided at a position shifted outwardly from a center line of the glass run in the direction of the thickness of the glass to the exterior of a compartment.

With the above-described arrangement, the difference in stage between the outer surface of the door glass and the door frame is a sum obtained by adding a thickness of the outer side portion of the glass run from the door glass to a thickness of a leg of the door frame, which is disposed outside the glass run, for pressing in the glass run, and the difference in stage becomes small as compared with the case of the conventional construction of the door frame. However, a fin portion on the outer side of the glass run, for contacting the outer surface of the door glass becomes small, thus possibly making the sealing imperfect.

It is therefore the primary object of this invention to provide a construction of a door frame in a motor vehicle, wherein a difference in stage between the door glass and the door frame can be made small by a simplified arrangement without being accompanied by the increase in the number of parts, manufacturing cost and the weight of the construction, and the sealing failures.

To this end, the present invention contemplates that, in a construction of a door frame in a motor vehicle, wherein: vertical side members of a door frame disposed along side end edges of a door glass are each formed with a guide portion being of a generally U-shape in cross section and surrounding the side end edge; and the side end edges of the door glass are slidably guided in a direction of opening or closing of the door glass by a glass run being of a generally U-shape in cross section and disposed in a guide groove inside the guide portion, the side end edges being restrained in the direction of the thickness of the door glass, characterised in that at least the guide portions of the vertical side members are shifted outward from the general outer surface of the vehicle body by a value substantially equal to the thickness of an outer side member of the guide portion.

According to an embodiment of the present invention, a gap is formed between inner peripheral edges of an inclined side member and a transverse side member in said door frame, excluding said vertical side members, and an inclined end edge and a top end edge of said door glass when said door glass is fully closed; and a door glass weatherstrip is provided, an outer end of which is made substantially flush with the general outer surface of the door frame, for sealing said gap when said door glass is fully closed.

According to a further embodiment of the present invention, said door glass weatherstrip is provided with an outer lip adapted to be clamped between the inclined end edge and the top end edge of the door glass and the inclined side member and the transverse side member of the door frame when the door glass is fully closed, to thereby seal the gap formed therebetween.

According to a further embodiment of the present invention, at least one of the vertical side members is outwardly shifted over the entire widths thereof from the outer plate surface of the door frame by a value corresponding to the thickness of the outer side member of the guide portion.

According to a further embodiment of the present invention, the outer side member of the guide portion is shifted only at the rear vertical side member, and a door mirror is mounted to a so-called triangular patch portion adjacent the forward vertical side member portion.

In this invention, the outer surface of only the guide portion of the vertical side portion of the guide frame or only the outer surface of the vertical side member of the door frame, including the guide portion, is shifted from the outer plate surface of the vehicle body, the outer surface of the door glass is held substantially flush with the outer surface of the vehicle body, and the flush-surfacing can be improved without being accompanied by the increase in the number of parts, manufacturing cost and weight of the construction, and the sealing failures.

Fig. 1 is a front view showing an embodiment of the construction of a door frame in a motor vehicle door according to the present invention;

Figs. 2 and 3 are enlarged sectional views taken along the line II—II and III—III in Fig. 1, respectively;

Fig. 4 is a sectional view showing a second embodiment of the present invention, similar to Fig. 2;

Fig. 5 is a front view showing the conventional construction of a door frame in a motor vehicle door; and

Fig. 6 is an enlarged sectional view taken along the line VI—VI in Fig. 5.

Description will hereunder be given of one embodiment of the present invention with reference to the drawings.

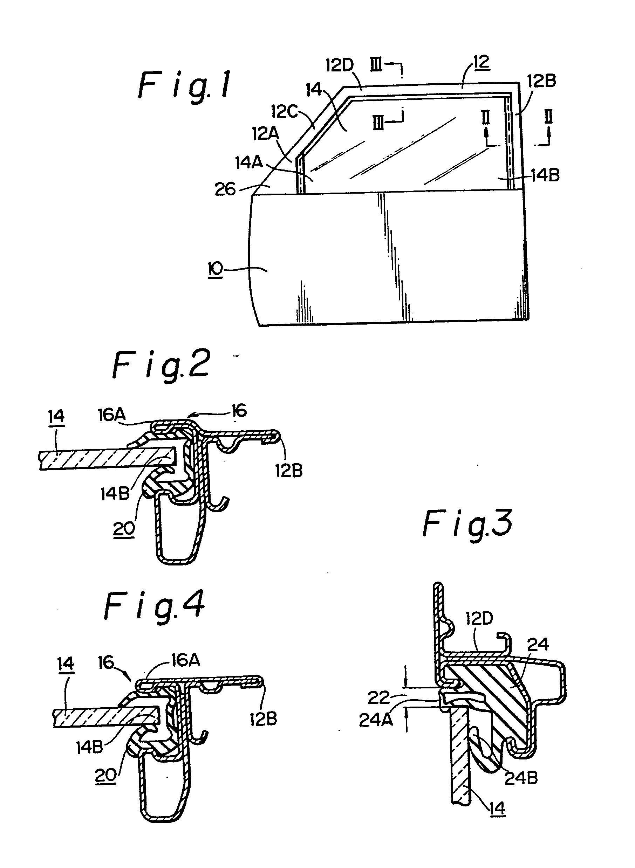

As shown in Figs. 1 and 2, according to this embodiment, vertical side members 12A and 12B of a door frame 12, disposed along side end edges 14A and 14B of a door glass 14 in the motor vehicle 10 are each formed with a guide portion 16 being of a generally U-shape in cross section and surrounding the side end edges 14A and 14B of the door glass 14, and the side end edges 14A and 14B are slidably guided in a direction of opening or closing of the door glass 14 by a glass run 20 being of a generally U-shape in cross section and disposed in a guide groove 18 inside the guide portion 16, the side end edges 14A and 14B being restrained in the direction of the thickness of the door glass 14, the guide portions 16 of the vertical side members 12A and 12B are shifted outwardly from the general outer plate surface of the door frame 12 by a value substantially equal to the thickness of an outer side member 16A of the guide portion 16.

A gap 22 is formed between inner peripheral edges of an inclined member 12C and a transverse member 12D in the door frame 12, excluding the vertical side members 12A and 12B and an inclined end edge 14C and a top end edge 14D of the door glass 14 when the door glass 14 is fully closed, as shown in Fig. 3, and a door glass weatherstrip 24 is provided, an outer end face of which is made substantially flush with the general outer surface of the door frame 12, for sealing the gap 22.

In Fig. 3, denoted at 24A is an outer lip adapted to be clamped between the inclined end edge 14C and the top end edge 14D of the door glass 14 and the inclined side member 12C and the transverse side member 12D of the door frame 12 when the door glass 14 is fully closed, to thereby seal a space formed therebeween, and 24B an inner lip coming into contact with the inner surfaces of the inclined end edge 14C and top end edge 14D of the door glass 14 when the door glass 14 is fully closed.

In this embodiment, only the outer side member 16A of the guide portion 16 is shifted outwardly from the general outer plate surface of the door frame 12 by a value of the thickness thereof, the outwardly shifted portion of the door frame 12 is small, and the outer surface of the door glass 14 is shifted outwardly by a value of the outward shift of the outer side member 16A so as to further reduce the difference in stage between the door glass 14 and the outer surface of the door frame 12, whereby the difference in stage between the door glass 14 and the door frame 12 is reduced by a simplified arrangement without being accompanied by the increase in the number of parts, manufacturing cost and weight of the construction, and sealing failures, so that flush-surfacing can be improved and the aesthetic appearance can be improved.

Additionally, in the above embodiment, the vertical side members 12A and 12B are raised from the general outer surface of the door frame 12 only at the outer side member 16A portion of the guide portion 16, however, the present invention need not necessarily be limited to this, as shown in Fig. 4, the vertical side members 12A and 12B may be outwardly raised over the entire widths thereof from the general outer plate surface of the door frame 12 by a value corresponding to the thickness of the outer side member 16A of the guide portion 16.

Furthermore, in the above embodiment, the outer side member 16A of the guide portion 16 is raised at both the forward and rear vertical side members 12A and 12B of the door frame 12, however, the present invention need not necessarily be limited to this, and, for example, the outer side member 16A of the guide portion 16 may be raised only at the rear vertical side member 12B.

For example, when a door mirror is to be mounted to a so-called triangular patch 26 portion adjacent the forward vertical side member 12A portion, the difference in stage of the outer surface of the door glass 14 from the forward vertical side member 12A is not problematical, and, in such a case as above, a door frame having the conventional construction as shown in Fig. 6 may be adopted.

## Claims

1. A construction of a door frame in a motor vehicle, wherein:
vertical side members (12A, 12B) of a door frame (12) disposed along side end edges (14A, 14B) of a door glass (14) are each formed with a guide portion (16) being of a generally U-shape in cross section and surrounding said side end edges (14A, 14B); and said side end edges (14A, 14B) of the door glass (14) are slidably guided in a direction of opening or closing of the door glass (14) by a glass run (20) being of a generally U-shape in cross section and disposed in a guide groove (18) inside said guide portion (16), said side end edges (14A, 14B) being restrained in the direction of the thickness of the door glass (14); characterized in that at least said guide portions (16) of the vertical side members (12A, 12B) are shifted outwardly from the outer plate surface of the vehicle body by a value substantially equal to the thickness of an outer side member (16A) of said guide portion (16).

2. A construction of a door frame in a motor vehicle as set forth in claim 1, wherein a gap (22) is formed between inner peripheral edges of an inclined side member (12C) and a transverse side member (12D) in said door frame (12), excluding said vertical side members (12A, 12B), and an inclined end edge (14C) and a top end edge (14D) of said door glass (14) when said door glass (14) is fully closed; and a door glass weatherstrip (24) is provided, an outer end of which is made substantially flush with the general outer surface of the door frame (12), for sealing said gap (22) when said door glass (14) is fully closed.

3. A construction of a door frame in a motor vehicle as set forth in claim 2, wherein said door glass weatherstrip (24) is provided with an outer lip (24A) adapted to be clamped between the inclined end edge (14C) and the top end edge (14D) of the door glass (14) and the inclined side member (12C) and the transverse side member (12D) of the door frame (12) when the door glass (14) is fully closed, to thereby seal the gap (22) formed therebetween.

4. A construction of a door frame in a motor vehicle as set forth in claim 1, 2 or 3, wherein at least one of the vertical side members (12A, 12B) is outwardly shifted over the entire widths thereof from the outer plate surface of the door frame (12) by a value corresponding to the thickness of the outer side member (16A) of the guide portion (16).

5. A construction of a door frame in a motor vehicle as set forth in claim 1, 2, 3 or 4, wherein the outer side member (16A) of the guide portion (16) is outwardly shifted only at the rear vertical side member (12B), and a door mirror is mounted to a so-called triangular patch (26) portion adjacent the forward vertical side member portion (12A).

## Patentansprüche

1. Konstruktion eines Türrahmens in einem Kraftfahrzeug, bei der:
vertikale Seitenteile (12A, 12B) eines Türrahmens (12), die längs der seitlichen Endkanten (14A, 14B) einer Türfensterscheibe (14) angeordnet sind, jeweils mit einem Führungsstück (16), das einen allgemein U-förmigen Querschnitt aufweist sowie die besagten seitlichen Endkanten (14A, 14B) umgibt, ausgestaltet sind; und die besagten seitlichen Endkanten (14A, 14B) der Türfensterscheibe (14) verschiebbar in einer Öffnungs- oder Schließrichtung der Türfensterscheibe (14) durch eine Türscheibenführung (20), welche einen allgemein U-förmigen Querschnitt hat und in einer Führungskehle (18) innenseitig des genannten Führungsstücks (16) angeordnet ist, geführt sind, wobei die besagten seitlichen Endkanten (14A, 14B) in der Richtung der Dicke der Türfensterscheibe (14) bewegungsbeschränkt sind; dadurch gekennzeichnet, daß wenigstens die genannten Führungsstücke (16) der vertikalen Seitenteile (12A, 12B) von der Außenplattenfläche des Fahrzeugaufbaus um einen Wert auswärts verschoben sind, der im wesentlichen gleich der Dicke eines äußeren Seitenwandteils (16A) des genannten Führungsstücks (16) ist.

2. Konstruktion eines Türrahmens in einem Kraftfahrzeug nach Anspruch 1, bei der zwischen Innenumfangskanten eines geneigten Seitenteils (12C) sowie eines querliegenden Seitenteils (12D) in dem besagten Türrahmen (12), unter Ausschluß der erwähnten vertikalen Seitenteile (12A, 12B), und einer geneigten Endkante (14C) sowie einer oberen Endkante (14D) der genannten Türfensterscheibe (14), wenn diese Türfensterscheibe (14) gänzlich geschlossen ist, eine Lücke (22) gebildet ist; und ein Türfensterscheiben-Dichtungsstreifen (24), dessen äußeres Ende im wesentlichen mit der allgemeinen äußeren Fläche des Türrahmens (12) bündig gemacht ist, vorgesehen ist, um die genannte Lücke (22) abzudichten, wenn die besagte Türfensterscheibe (14) völlig geschlossen ist.

3. Konstruktion eines Türrahmens in einem Kraftfahrzeug nach Anspruch 2, bei der der genannte Türfensterscheiben-Dichtungsstreifen (24) mit einer äußeren Lippe (24A) versehen ist, die so angepaßt ist, daß sie zwischen der geneigten Endkante (14C) sowie der oberen Endkante (14D) der Türfensterscheibe (14) und dem geneigten Seitenteil (12C) sowie dem querliegenden Seitenteil (12D) des Türrahmens (12) einzuklemmen ist, wenn die Türfensterscheibe (14) völlig geschlossen ist, um dadurch die dazwischen ausgebildete Lücke (22) abzudichten.

4. Konstruktion eines Türrahmens in einem Kraftfahrzeug nach Anspruch 1, 2 oder 3, bei der wenigstens eines der vertikalen Seitenteile (12A, 12B) auswärts über seine gesamten Breiten von der Außenplattenfläche des Türrahmens (12) um einen Wert verschoben ist, welcher der Dicke des äußeren Seitenwandteils (16A) des Führungsstücks (16) entspricht.

5. Konstruktion eines Türrahmens in einem Kraftfahrzeug nach Anspruch 1, 2, 3 oder 4, bei der das äußere Seitenwandteil (16A) des Führungsstücks (16) lediglich am rückwärtigen vertikalen Seitenteil (12B) auswärts verschoben und ein Türspiegel an einem sog. dreieckigen Einsatzstück (26) nahe dem vorwärtigen vertikalen Seitenteil (12A) befestigt ist.

## Revendications

1. Une structure de cadre de portière d'un véhicule automobile, dans laquelle

des organes latéraux verticaux (12A, 12B) d'encadrement (12) disposés sur les bords d'extrémité latéraux (14A, 14B) d'une vitre de portière (14) comportièrent chacun une partie de guidage (16) de section transversale généralement en forme de U et entourant lesdits bords d'extrémité latéraux (14A, 14B); lesdits bords d'extrémité latéraux (14A, 14B) de la vitre de portière sont guidés de façon coulissante dans le sens de l'ouverture ou de la fermeture de la vitre (14) par un chemin à glissière (20) de section transversale généralement en forme de U est disposés dans une rainure de guidage (18) située à l'intérieur de la partie (16) de guidage, lesdits bords d'extrémité latéraux (14A, 14B) étant retenus dans le sens de l'épaisseur de la vitre (14); structure caractérisée en ce qu'au moins lesdites parties de guidage (16) des organes latéraux verticaux (12A, 12B) sont décalés vers l'extérieur par rapport à la surface de plaque externe de la caisse du véhicule d'une valeur sensiblement égale à l'épaisseur d'un organe latéral externe (16A) de ladite partie de guidage (16).

2. Une structure de cadre de portière d'un véhicule automobile selon la revendication 1, dans laquelle un interstice (22) est formé entre les bords périphériques internes d'un organe latéral incliné (12C) et un organe latéral transversal (12D) dudit encadrement de portière (12) à l'exclusion desdites organes latéraux verticaux (12A, 12B) et entre un bord d'extrémité incliné (14C) et un bord d'extrémité supérieur (14D) de ladite vitre (14) lorsque ladite vitre (14) est complètement fermée; et on prévoit un joint d'étanchéité (24) de vitre, dont l'extrémité externe est sensiblement au même niveau que la surface générale externe de l'encadrement (12) de portière, pour fournir une étanchéité audit interstice (22) lorsque ladite vitre (14) est complètement fermée.

3. Une structure de cadre de portière d'un véhicule automobile selon la revendication 2, dans laquelle ledit joint d'étanchéité (24) est pourvu d'une lèvre externe (24A) conçue pour être serrée entre le bord d'extrémité incliné (14C) et le bord d'extrémité supérieur (14D) de la vitre de portière (14) et entre l'organe latéral incliné (12C) et l'organe latéral transversale (12D) de l'encadrement (12) lorsque la vitre (14) est complètement fermée, pour réaliser l'étanchéité à l'interstice (22) formé entre ceux-ci.

4. Une structure de cadre de portière d'un véhicule automobile selon la revendication 1, 2 ou 3, dans laquelle au moins un des organes latéraux verticaux (12A, 12B) est décalé vers l'extérieur sur toute sa longueur par rapport à la surface de plaque externe de l'encadrement (12) de portière d'une valeur correspondant à l'épaisseur de l'organe latéral externe (16A) de la partie (16) de guidage.

5. Une structure de cadre de portière d'un véhicule automobile selon la revendication 1, 2, 3 ou 4, dans laquelle l'organe latéral externe (16A) de la partie de guidage (16) est décalé vers l'extérieur au seul niveau de l'organe latéral vertical arrière (12B), et dans laquelle un rétroviseur est monté sur une pièce dite de raccord triangulaire (26) adjacente à la partie d'élément latéral vertical avant (12A).

Fig.1

Fig.2

Fig.3

Fig.4

# Fig.5

# Fig.6